# EUROPEAN PATENT SPECIFICATION

(11) **EP 0 819 238 B1**
(45) Date of publication and mention of the grant of the patent: **08.05.2002**
(21) Application number: 96912442.9
(22) Date of filing: 29.03.1996
(51) Int. Cl.: F42C 19/08, C06D 5/06, C06C 9/00, C06B 31/32

(54) **AN ALL PYROTECHNIC METHOD OF GENERATING A PARTICULATE-FREE, NON-TOXIC ODORLESS AND COLORLESS GAS**
VOLL PYROTECHNISCHES VERFAHREN ZUM GENERIEREN EINES TEILCHENFREIEN, FARBLOSEN UND GERUCHLOSEN NICHT-GIFTIGEN GASES
PROCEDE ENTIEREMENT PYROTECHNIQUE DE PRODUCTION D'UN GAZ INCOLORE, INODORE, NON TOXIQUE ET EXEMPT DE PARTICULES

(30) Priority: 31.03.1995 US 414469
(43) Date of publication of application: 21.01.1998
(73) Proprietor: ATLANTIC RESEARCH CORPORATION, Vienna, VA 22182 (US)
(72) Inventor: SCHEFFEE, Robert, S., Gainesville, VA 22065 (US); THIBODEAU, Robert, Lee, Gainesville, VA 22065 (US)
(74) Representative: Behnisch, Werner, Dr.
(86) International application number: US9603961
(87) International publication number: WO9630716

(56) References cited:
- WO-A-95/09825
- DE-C- 851 919
- GB-A- 138 371
- US-A- 3 720 553
- US-A- 3 739 574
- US-A- 3 773 351
- US-A- 3 954 528
- US-A- 4 111 728
- US-A- 4 632 714
- US-A- 4 948 438
- US-A- 5 351 619
- US-A- 5 380 380
- US-A- 5 411 615
- US-A- 5 460 671
- US-A- 5 482 579
- US-A- 5 531 941

## Description

### FIELD OF THE INVENTION

The instant invention involves an improved method of using a eutectic solution of ammonium nitrate (AN) and at least one of aminoguanidine nitrate (AGN) and guanidine nitrate (AN), optionally with potassium nitrate (KN), in an all pyrotechnic inflator to generate a particulate-free, non-toxic, odorless and colorless gas, for various purposes, such as inflating a vehicle occupant restraint, i.e., an air bag for an automotive vehicle.

### BACKGROUND OF THE INVENTION

The present invention relates generally to solid composite propellant compositions and more particularly to solid composite propellant compositions useful as gas generators as described in related concurrently filed application Serial No. .

Recently, there has been a great demand for new gas generating propellants which are cool burning, non-corrosive and yield a high volume of gas and low solid particulates because attempts to improve existing gas generating compositions have been unsuccessful for various reasons. For example, while the addition of certain modifiers has lowered the flame temperature and increased gas production, these same modifiers have contributed to the production of undesirable corrosive products. In turn, other modifiers utilized in the past, while not producing corrosive materials, have not succeeded in lowering the flame temperature significantly or of increasing gas evolution.

The usual gas generator composition, known in gas generator technology as the "propellant", is comprised of ammonium nitrate oxidizer with rubbery binders or in pressed charges. Various chemicals such as guanidine nitrate, oxamide and melamine are used in the propellant to aid ignition, give smooth burning, modify burning rates and give lower flame temperatures.

Ammonium nitrate is the most commonly used oxidizer since it is exceptionally effective per unit weight and yields a non-toxic and non-corrosive exhaust at low flame temperatures. Further, it contributes to burning rates lower than those of other oxidizers. Ammonium nitrate is cheap, readily available and safe to handle. The main objection to ammonium nitrate is that it undergoes certain phase changes during temperature variations causing cracks and voids if any associated binder is not sufficiently strong and flexible to hold the composition together.

Ammonium nitrate compositions are hygroscopic and difficult to ignite, particularly if small amounts of moisture have been absorbed. Since said compositions do not sustain combustion at low pressures, various combustion catalysts are added to promote ignition and low pressure combustion as well as to achieve smooth, stable burning. Gas generator compositions used for air bags should contain no metallic additives or even oxidizers such as ammonium perchlorate, because these give erosive and corrosive exhaust gases respectively. Commonly used additives, such as ammonium dichromate, copper chromite, etc., are disadvantageous since they all produce solids in the exhaust gases.

Gas generator compositions are usually manufactured by a pressing or by an extruding and compression molding technique. The solid particles are formed and the composition is broken up into bits ("granulated") with appropriate granulator-type equipment.

After granulation, the composition is loaded into molds of the required shapes and pressed to about 7000 psi (4921 kg/cm²). With certain types of binder, the molds are heated to about 180°F (82°C) until the composition is cured or vulcanized. The grain is then potted into the gas generator cases. The molds, mills and extrusion equipment are costly; the lengthy process time further increases the cost of manufacture. It is especially difficult to produce large grains by this technique.

The art is replete with instances of compositions containing a guanidine-type compound together with an oxidizer, such as ammonium nitrate. For example, in U.S. Patent 3,031,347, guanidine nitrate and ammonium nitrate are listed together at column 2, as well as in Examples 3 and 5. However, compared with the present invention, not only does the guanidine compound lack an amino group, as in the aminoguanidine nitrate embodiment, but the composition disclosed in the patent is not a eutectic solution-forming mixture. Likewise, see U.S. Patent 3,739,574, col. 2, in the Table. On the other hand, U.S. Patent 3,845,970, at column 3, discloses a list of solid compositions for generating gas in a shock absorption system. Among the components of the various compositions are ammonium nitrate and aminoguanidine nitrate. The two materials are not disclosed in admixture and, obviously, are not in a eutectic composition.

Similarly, U.S. Patent 3,954,528, discloses new solid composite gas generating compositions. Among the ingredients mentioned are ammonium nitrate and triaminoguanidine nitrate. See Examples 2 through 5. However, neither the specific components of the aminoguanidine nitrate compositions at hand, nor any eutectic compositions, are disclosed therein.

In U.S. Patent 4,111,728, the inventor discloses ammonium nitrate with small amounts of guanidine nitrate. See column 2 and the table at columns 3-4. However, the compositions do not include aminoguanidine nitrate and do not characterize any composition as forming a eutectic solution.

U.S. Patent 5,125,684 also discloses propellant compositions containing dry aminoguanidine nitrate and an oxidizer salt containing a nitrate anion. However, the disclosure is deficient with respect to the present invention since it fails to disclose the specific combination of components of the present invention and does not mention eutectics.

Finally, U.S. Patent 5,336,439 concerns salt compositions and concentrates used in explosive emulsions. As disclosed at columns 37 and 38, ammonium nitrate is one of the ingredients for forming the patentee's composition, while at column 20, line 51, aminoguanidine is indicated as also being an appropriate component. Nevertheless, like the other disclosures mentioned, the patent fails to disclose a specific composition including the same nitrates as are disclosed herein and clearly does not teach a eutectic composition containing said components.

### SUMMARY OF THE INVENTION

The invention herein involves eutectic mixtures of ammonium nitrate and guanidine nitrate (GN) or aminoguanidine nitrate, as well as a method of generating a particulate-free, non-toxic, odorless and colorless gas for various purposes, such as to inflate an air bag in an automotive vehicle. In generating a particulate-free, non-toxic, odorless and colorless gas, an enclosed chamber having exit ports is provided; a solid eutectic solution comprising ammonium nitrate and either aminoguanidine nitrate or guanidine nitrate is disposed within said chamber; means are then provided for igniting said eutectic solution in response to a sudden deceleration being detected by a detection device in the chamber, whereby gas is instantly generated and conducted through the exit ports of the chamber to accomplish a desired function, such as inflating an automotive vehicle air bag.

Eutectic mixtures of ammonium nitrate and aminoguanidine nitrate or guanidine nitrate, it has been found, eliminate pellet cracking and substantially reduce ammonium nitrate phase change due to temperature cycling. Moreover, the addition of about 1 - about 2% potassium nitrate to the noted eutectic totally eliminates the ammonium nitrate phase change and maintains the freedom from cracking of the pressed pellet upon temperature cycling.

### DESCRIPTION OF THE PREFERRED EMBODIMENT

To achieve the advantages of employing ammonium nitrate, e.g., low cost, availability and safety, while avoiding its drawbacks, e.g., cracks and voids in the pressed pellet when subjected to temperature cycling, it is proposed to mix the ammonium nitrate oxidizer with aminoguanidine nitrate or guanidine nitrate and then form a eutectic solution which avoids some of the problems previously encountered and discussed above. Thus, the provision of the ammonium nitrate/aminoguanidine nitrate or the AN/GN as a eutectic in the form of a pressed pellet provides a generator to produce a particulate-free, non-toxic, , odorless, and colorless gas for inflating an air bag, but without the tendency of the pellet to crack and with reduced phase change of the AN due to temperature cycling. Also, to some degree, the hygroscopicity of the mixture is reduced. By the addition of small amounts of potassium nitrate, such as about 1 - about 2% by weight, freedom from cracking of the pressed pellet upon temperature cycling is still maintained and the phase change of the AN is completely eliminated.

When equal parts of ammonium nitrate and aminoguanidine nitrate are melted together, a low-melting point solution is formed. The respective melting points are 169, 148 and 108°C for ammonium nitrate, aminoguanidine nitrate and the 50/50 mixture thereof, respectively.

In addition, it has been discovered that the same eutectic employed to generate the gases may also be used as the igniter in the inflator device. By so utilizing the same eutectic for igniting the propellant, the inventors are able to eradicate the smoke that would otherwise be present in the exhaust. For the igniter load, the eutectic is provided as a powder, granulate, monolithic composite or any other form that may conveniently be disposed in the generator. This use of the noted eutectic as an igniter is not limited to its employment in conjunction with the same composition as generant, but is effective as a general purpose smokeless igniter.

The above-described eutectic, when used as the generant, as well as the igniter, enables the use of an inflator that delivers hot gas for the purpose of inflating an air bag, the gas being non-toxic and particulate-free. This inflator or gas generator is smaller than comparable units and exhibits lower weight than its counterparts in industry. The pressure vessel remains unpressurized until air bag deployment which eliminates the need for a compressed gas storage medium.

By this invention, the propellant or generant, when ignited by the initiator causes the non-toxic particulate-free effluent to pressurize the cartridge which ruptures the seal and causes the effluent to exhaust through a diffuser into an air bag.

### THE DRAWINGS

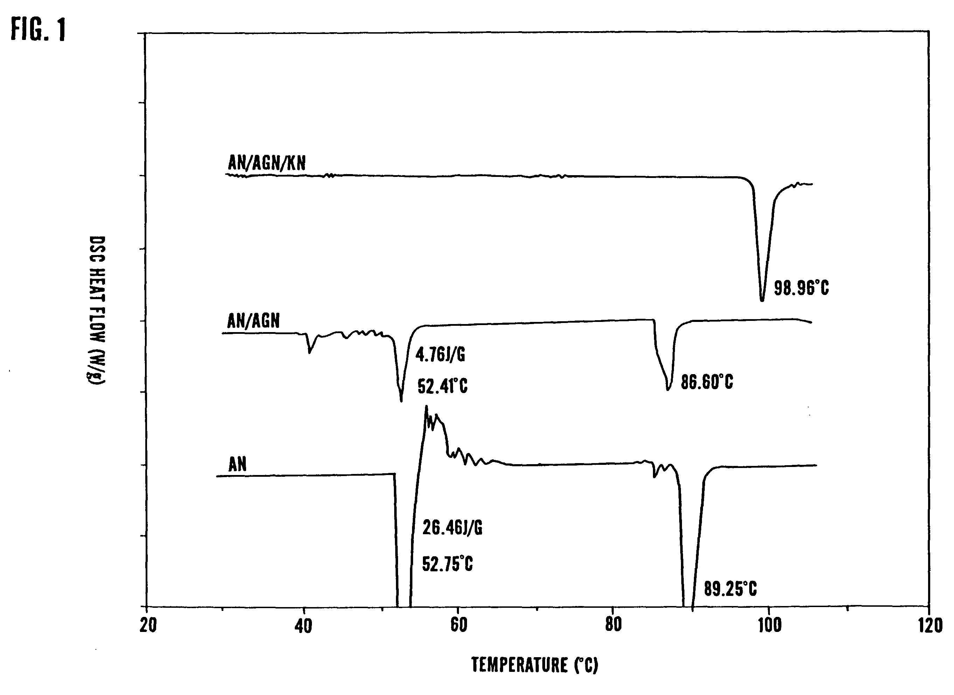

To demonstrate the effectiveness of the present propellant system, attention is invited to Fig. 1 of the present drawings, wherein DSC heat flow (W/g) produced by ammonium nitrate (AN) and ammonium nitrate/aminoguanidine nitrate eutectic (AN/AGN) and of a mixture of AN, AGN and potassium nitrate (KN) are compared. The three component composition provides a uniform heat flow up to 98.96°C. On the other hand, the two component composition dips sightly at 52.41°C and then continues to 86.60°C. The ammonium nitrate, by itself, exhibits a precipitous drop at 52.75°C, followed by a slight increase and a second drop at 89.25°C.

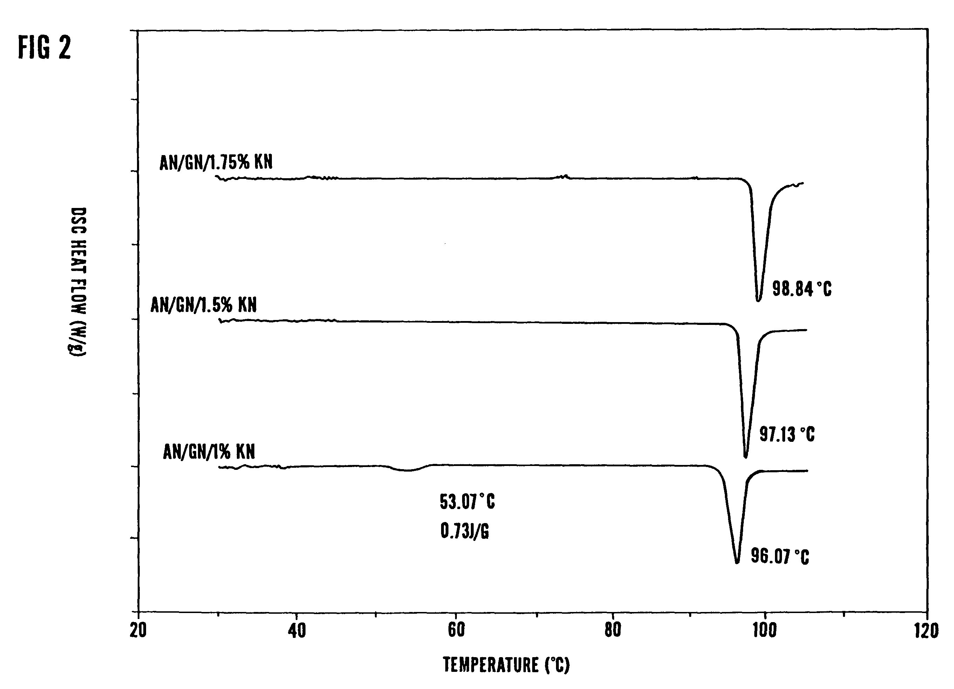

In Fig. 2, small variations in the concentration of potassium nitrate in AN/GN/KN compositions are compared. At 1% KN, the composition exhibits a small decline at 53.07°C and continues without any major variations until 96.07°C. On the other hand, when the concentration of potassium nitrate is increased to 1.5%, the heat flow continues at a constant rate until 97.13°C. By increasing the concentration of potassium nitrate to 1.75%, one extends the uniform heat flow until 98.84°.

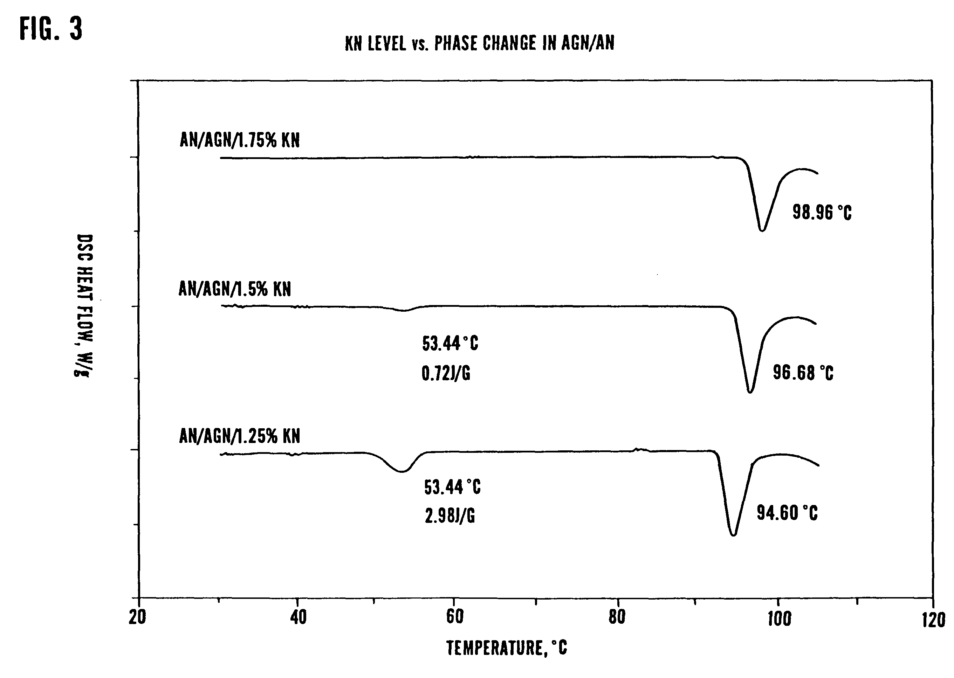

In a further comparison, similar to that shown in Fig. 2, but with AGN instead of GN, Fig. 3 shows essentially the same pattern of heat flow. Although greater differences are reported between compositions containing 1.75% KN, as opposed to compositions containing 1.5% KN and 1.25% KN, compared with the results in Fig. 2, the overall graph represents essentially the same type of data.

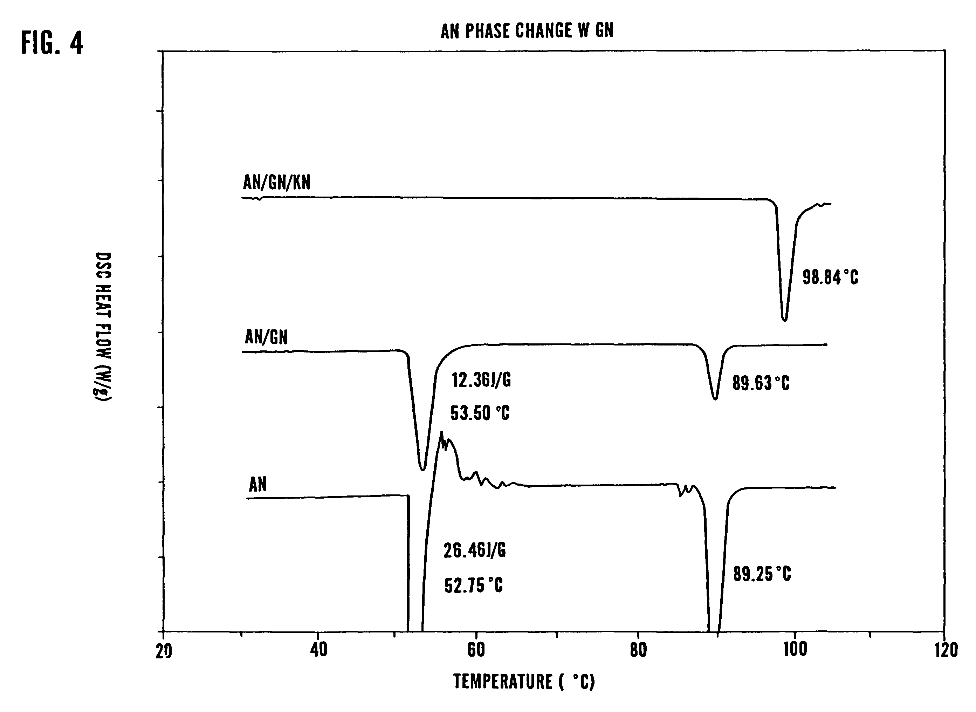

Fig. 4 represents a comparison like that of Fig. 1, but exemplifying the phase change of a guanidine nitrate/ammonium nitrate (GN/AN) composition, instead of an AGN/AN composition. Although the specific values for the depressions vary somewhat, the overall results follow the same pattern shown for the corresponding composition containing the aminoguanidine nitrate, instead of guanidine nitrate, as here.

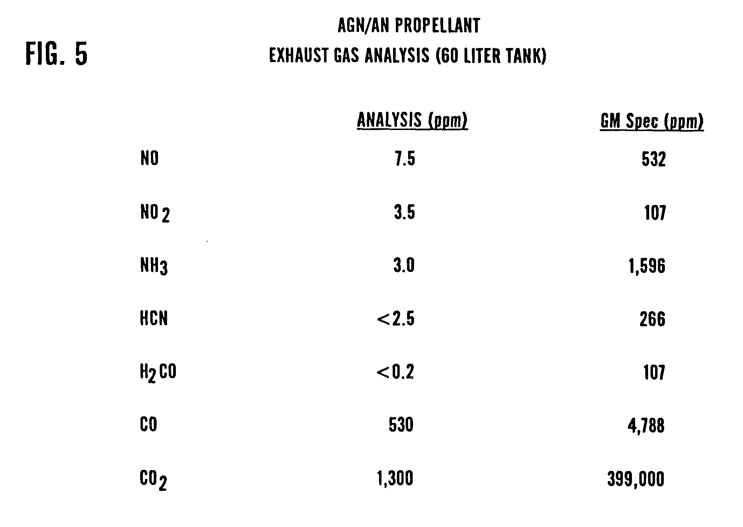

Fig. 5 provides an analysis of the exhaust gas provided by an aminoguanidine nitrate/ammonium nitrate propellant. The exhaust gas is collected in a 60 liter tank and indicates 1300 ppm of carbon dioxide, with a smaller amount of 530 ppm of carbon monoxide. The exhaust gas also contains non-toxic amounts of hydrogen cyanide, formaldehyde, ammonia and nitrogen oxides.

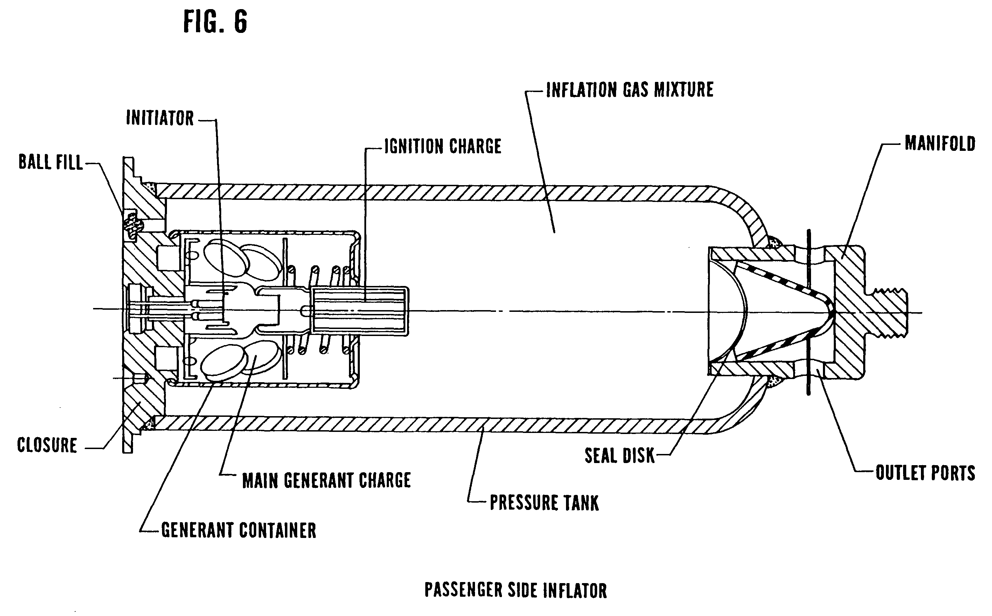

In Fig. 6, conventional hybrid apparatus for use in the generation of gas to inflate an automotive vehicle air bag is depicted. As is readily seen from the drawing, the outlet ports are provided at the extreme right of the device, which includes a chamber for storing gas under pressure.

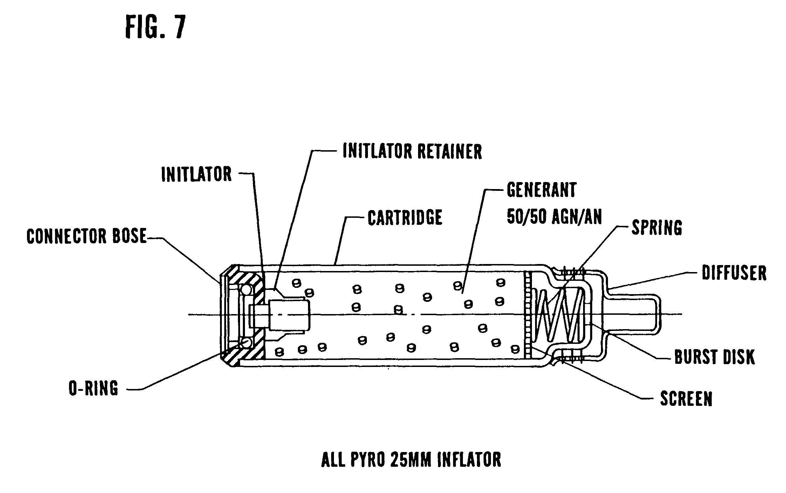

Fig. 7 is a drawing of the all pyrotechnic generator of the instant invention, wherein no gas is present until the igniter causes the propellant to break down and release the non-toxic particulate-free gases. Since no part of the inflator is reserved for storage capacity, the device is smaller than its counterpart hybrid inflator.

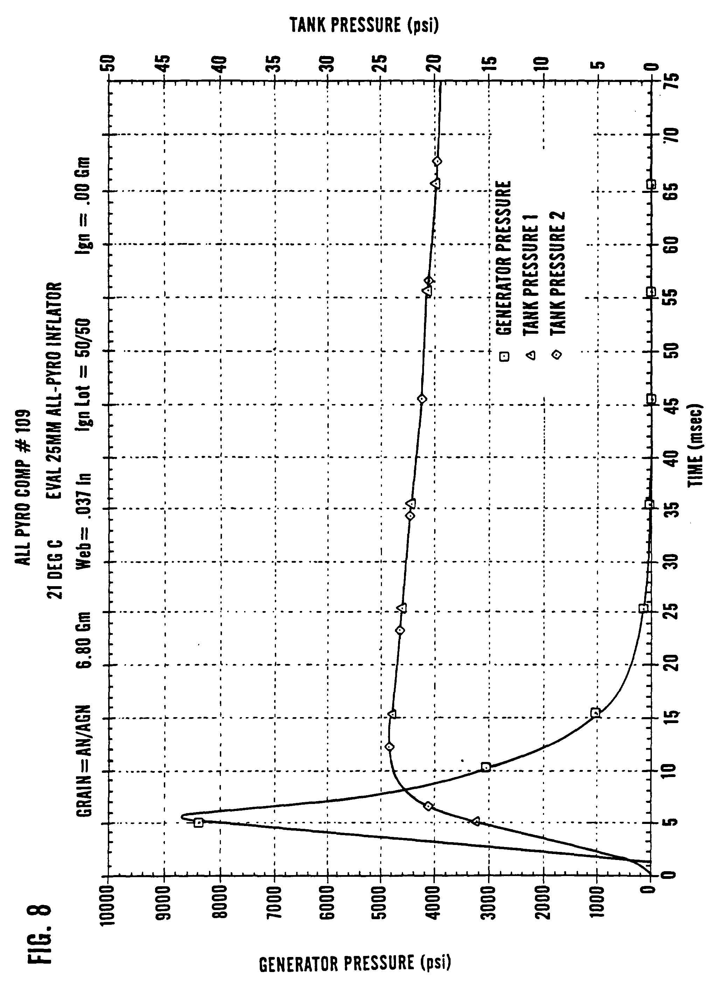

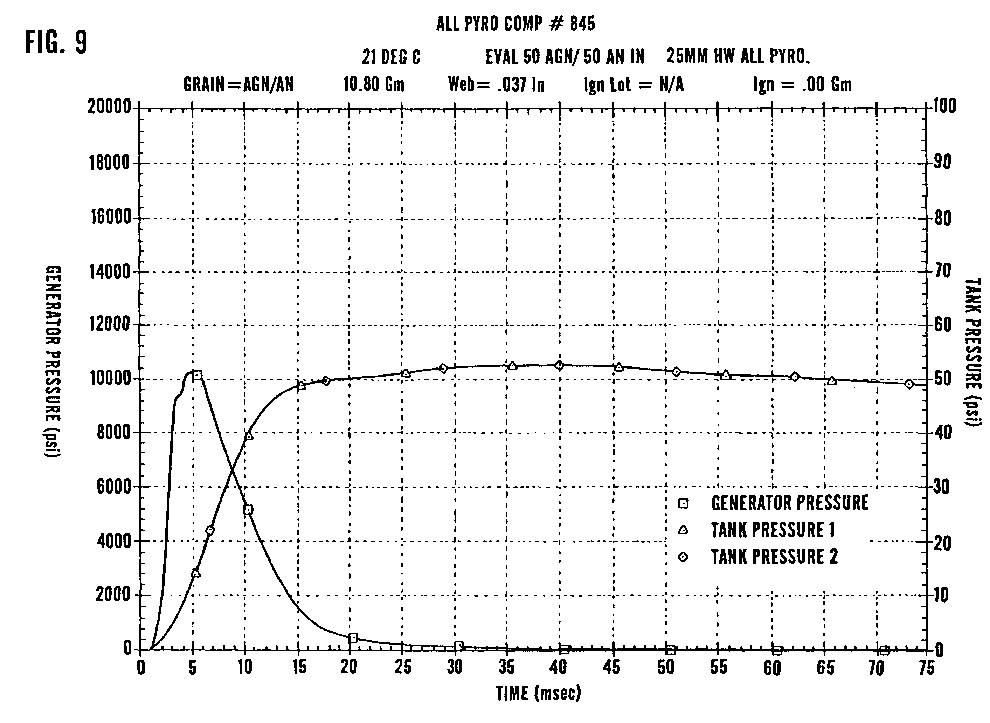

Figs. 8 and 9 represent the data of Examples 1 and 2 graphically.

### The Examples

To illustrate the effectiveness of the instant method, the following examples were conducted. Example 2 is essentially the same as Example 1 and depicts the reproducibility of the reported results.

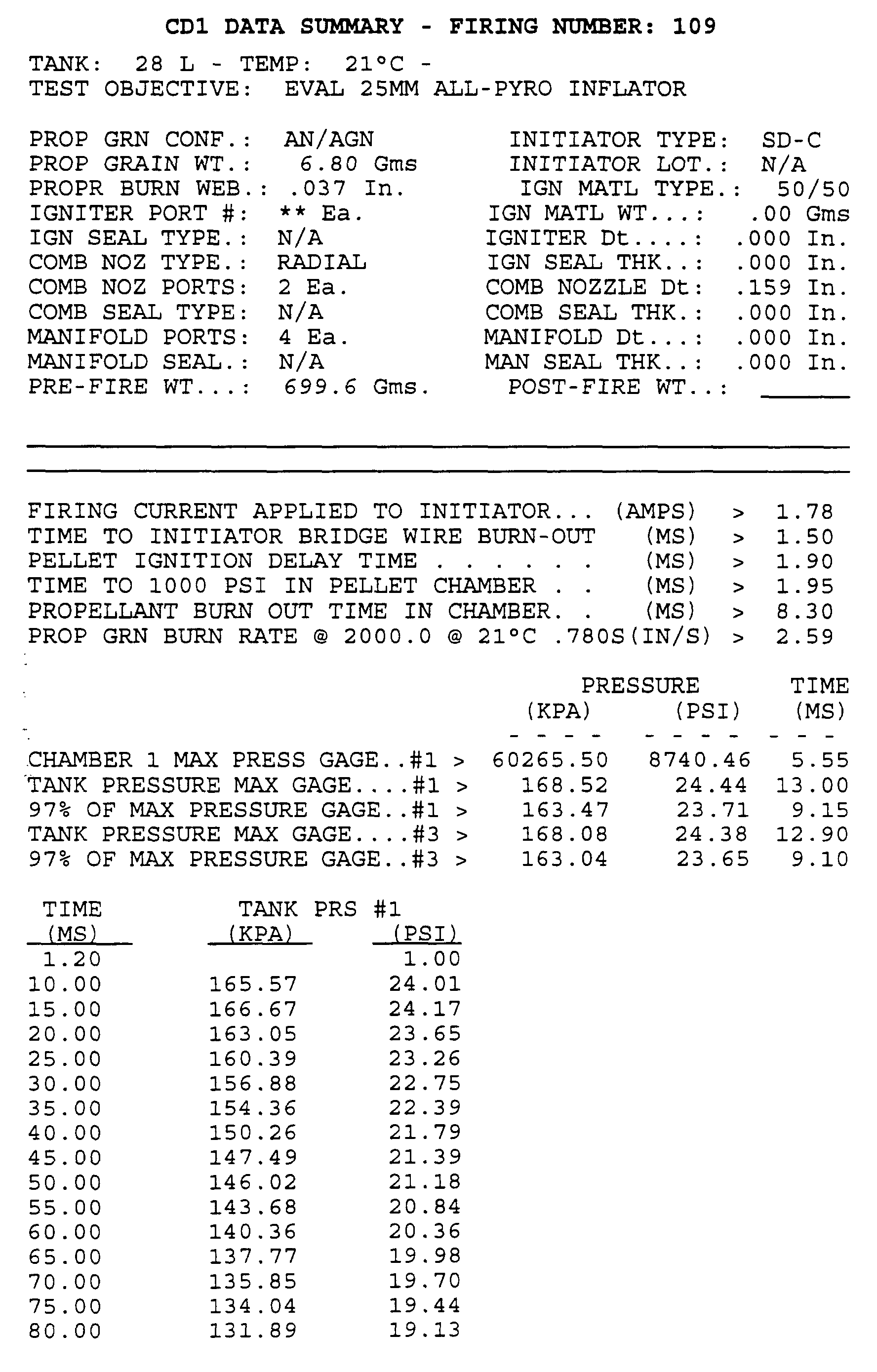

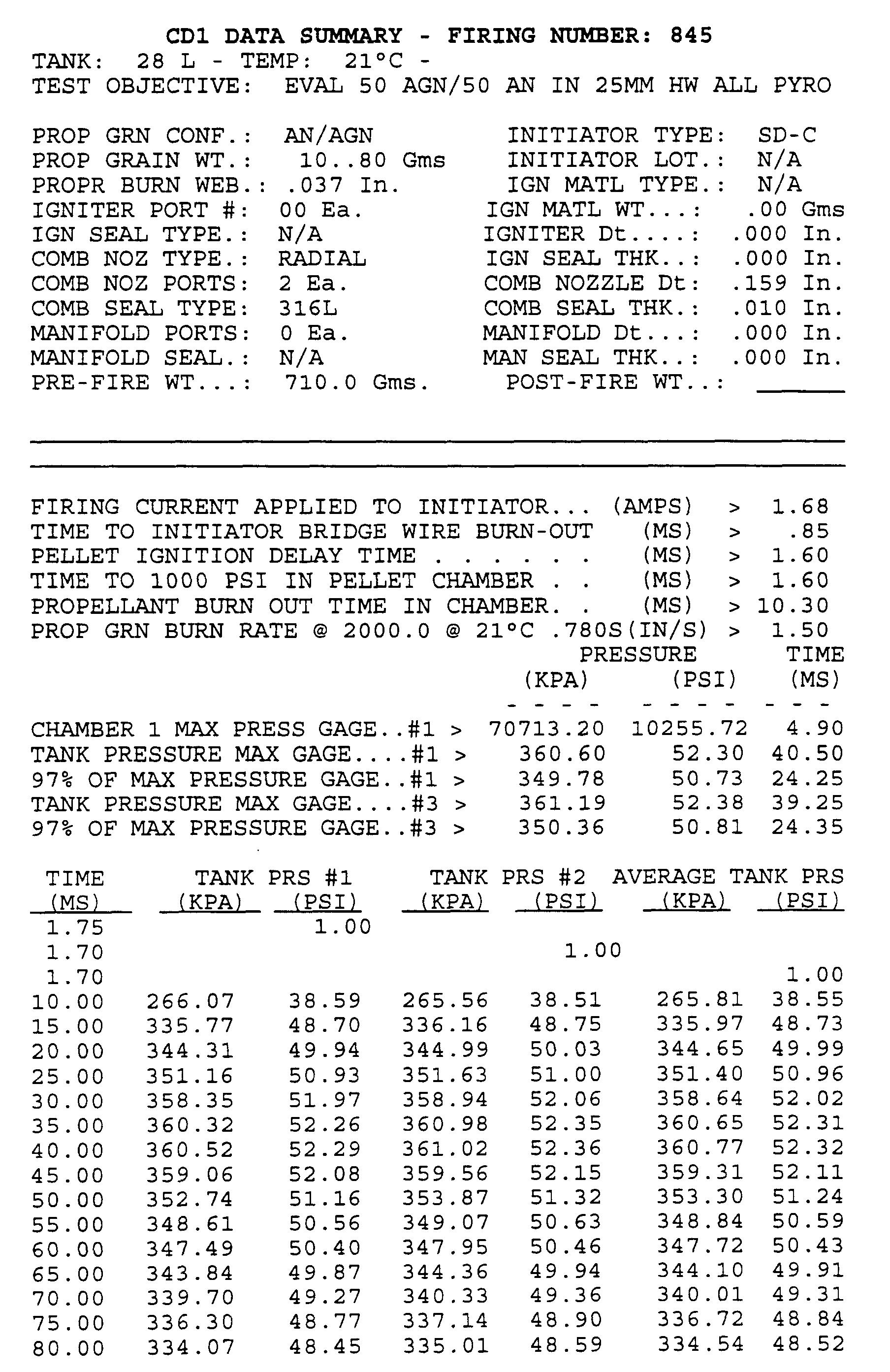

Only the preferred embodiment of the invention and a few examples of its versatility are shown and described in the present disclosure. It is to be understood that the invention is capable of use in various other combinations and environments and is capable of changes or modifications within the scope of the inventive concept as expressed herein.

Additional objects and advantages of the present invention will become readily apparent to those skilled in this art from the description. As will be realized, the invention is capable of other and different embodiments, and its several details are capable of modifications in various obvious respects, all without departing from the invention. Accordingly, the drawings and description are to be regarded as illustrative in nature, and not as restrictive.

## Claims

1. An all pyrotechnic method of generating a particulate-free, non-toxic, odorless and colorless gas comprising the steps:
a) providing an enclosed chamber having exit ports,
b) dispose within said chamber, a solid eutectic solution comprising ammonium nitrate and at least one of aminoguanidine nitrate and guanidine nitrate as the sole source of gas, and
c) providing said eutectic generant solution as the means for igniting the propellant eutectic solution upon detection of the pressure chamber being subjected to a sudden deceleration, whereby gas is instantly generated and conducted through the exit ports of said chamber.

2. The method of claim 1, conducted in an automotive vehicle equipped with at least one air bag, wherein the generated gas, conducted through the exit ports, thereafter enters said air bag, which it instantly inflates.

3. The method of claim 2, wherein the propellant eutectic solution also includes a minor amount of potassium nitrate.

4. The method of claim 3 wherein said potassium nitrate is present in the range of about 1 to about 2% by weight.

5. The method of claim 4 wherein the propellant eutectic solution is present in the form of a pressed pellet which is resistant to cracking when subjected to temperature cycling.

6. In a method of instantly generating a gas wherein a propellant composition is disposed within a chamber and means are provided for igniting said composition in response to the detection of a sudden deceleration, the improvement wherein the igniter comprises a eutectic solution containing ammonium nitrate and at least one of aminoguanidine nitrate and guanidine nitrate optionally with a minor amount of potassium nitrate.

## Patentansprüche

1. Vollständig pyrotechnisches Verfahren zur Erzeugung eines Teilchen-freien, nicht toxischen, geruchslosen und farblosen Gases, mit den Schritten:
a) Bereitstellen einer geschlossenen Kammer mit Ausgangsöffnungen,
b) Anordnen einer festen eutektischen Lösung in der Kammer, enthaltend AmmoniumNitrat und mindestens eines von Aminoguanidin-Nitrat und Guanidin-Nitrat als einzige Gasquelle, und
c) Bereitstellen der eutektischen Erzeugerlösung als Mittel zur Zündung der eutektischen Treiblösung bei Erfassung, dass die Druckkammer einer plötzlichen Verlangsamung ausgesetzt ist, wodurch das Gas sofort erzeugt und durch die Auslassöffnungen der Kammer geführt wird.

2. Verfahren nach Anspruch 1, durchgeführt in einem Fahrzeug mit Eigenantrieb, das mit mindestens einem Airbag ausgestattet ist, wobei das durch die Auslassöffnungen geführte, erzeugte Gas anschließend in den Airbag eintritt, der sofort aufgeblasen wird.

3. Verfahren nach Anspruch 2, wobei die eutektische Treiblösung weiterhin eine geringe Menge Kaliumnitrat enthält.

4. Verfahren nach Anspruch 3, wobei das Kaliumnitrat im Bereich von ungefähr 1 bis ungefähr 2 Gew.-% vorliegt.

5. Verfahren nach Anspruch 4, wobei die eutektische Treiblösung in Form eines gepreßten Pellets vorliegt, welches bei Behandlung in einem Temperaturzyklus gegenüber Bruch stabil ist.

6. In einem Verfahren zur sofortigen Erzeugung eines Gases, wobei eine Treibmittel-Zusammensetzung in einer Kammer angeordnet wird und Mittel zur Zündung der Zusammensetzung in Reaktion auf die Erfassung einer plötzlichen Verlangsamung vorgesehen sind, eine Verbesserung, wobei der Zünder eine eutektische Lösung umfaßt, die Ammoniumnitrat und mindestens eines von Aminoguanidin-Nitrat und Guanidin-Nitrat enthält, wahlweise mit einer geringen Menge an Kaliumnitrat.

## Revendications

1. Procédé entièrement pyrotechnique pour produire un gaz non particulaire, non toxique, inodore et incolore comprenant les étapes consistant à :
a) fournir une chambre fermée ayant des orifices de sortie ;
b) déposer dans ladite chambre une solution eutectique solide comprenant du nitrate d'ammonium et au moins un élément entre le nitrate d'aminoguanidine et le nitrate de guanidine en tant qu'unique source de gaz ; et
c) fournir ladite solution génératrice eutectique comme les moyens pour initier la solution eutectique propulsive lors de la détection de l'exposition de la chambre de pression à une décélération soudaine, du gaz étant produit instantanément et acheminé à travers les orifices de sortie de ladite chambre.

2. Procédé selon la revendication 1, installé dans un véhicule automobile équipé d'au moins un coussin gonflable, dans lequel le gaz produit, acheminé à travers les orifices de sortie, pénètre ensuite à l'intérieur dudit coussin gonflable, qu'il gonfle instantanément.

3. Procédé selon la revendication 2, dans lequel la solution eutectique propulsive contient également une faible quantité de nitrate de potassium.

4. Procédé selon la revendication 3, dans lequel ledit nitrate de potassium est présent dans l'ordre de grandeur d'environ 1 à environ 2 % par poids.

5. Procédé selon la revendication 4, dans lequel la solution eutectique propulsive est présente sous la forme d'un granule pressé qui résiste au craquage lorsqu'il est exposé à des variations cycliques de la température.

6. Dans un procédé de production instantanée d'un gaz dans lequel une composition propulsive est disposée à l'intérieur d'une chambre et des moyens sont prévus pour allumer ladite composition en réaction à la détection d'une décélération soudaine, l'amélioration selon laquelle l'allumeur comprend une solution eutectique contenant du nitrate d'ammonium et au moins un élément entre le nitrate d'aminoguanidine et le nitrate de guanidine, éventuellement avec une faible quantité de nitrate de potassium.
